# EUROPÄISCHE PATENTANMELDUNG

(11) **EP 0 878 648 A2**
(43) Veröffentlichungstag der Anmeldung: **18.11.1998**
(21) Anmeldenummer: 98108859.4
(22) Anmeldetag: 15.05.1998
(51) Int. Cl.: F16K 1/36

(54) **Kolben für ein Servoventil**

(30) Priorität: 17.05.1997 DE 29708798 U
(71) Anmelder: Danfoss Fluidtechnik GmbH, 70188 Stuttgart (DE)
(72) Erfinder: Bennett, Paul, 92331 Parsberg (DE); Weidner, Siegfried, 70567 Stuttgart (DE)
(74) Vertreter: Wilhelm & Dauster Patentanwälte European Patent Attorneys

(57) **Zusammenfassung**

Es wird ein Kolben für ein Servoventil beschrieben, der mit einem Ventilteller (2) mit einem zentral angeordneten Befestigungszapfen (1), einer im Bereich des Umfanges des Ventiltellers umlaufenden Manschette (3) zur Abdichtung im zugeordneten Zylinder, sowie mit einer der von dem Zapfen abgewandten Stirnfläche des Ventiltellers zugeordneten Dichtung (7) zur Zusammenwirkung mit einem Ventilsitz versehen ist.

Zur einfacheren Herstellung wird vorgesehen, daß Ventilteller, Befestigungszapfen, Manschette und Dichtung einstückig aus Kunststoff hergestellt und insbesondere als Kunststoffspritzteil ausgebildet sind. Die Montage mehrerer Einzelteile wird überflüssig.

## Beschreibung

Die Erfindung betrifft einen Kolben für ein Servoventil, der mit einem Ventilteller mit einem zentral angeordneten Befestigungszapfen, einer im Bereich des Umfanges des Ventiltellers umlaufenden Manschette zur Abdichtung im zugeordneten Zylinder, sowie mit einer der von dem Zapfen abgewandten Stirnfläche des Ventiltellers zugeordneten Dichtung zur Zusammenwirkung mit einem Ventilsitz versehen ist.

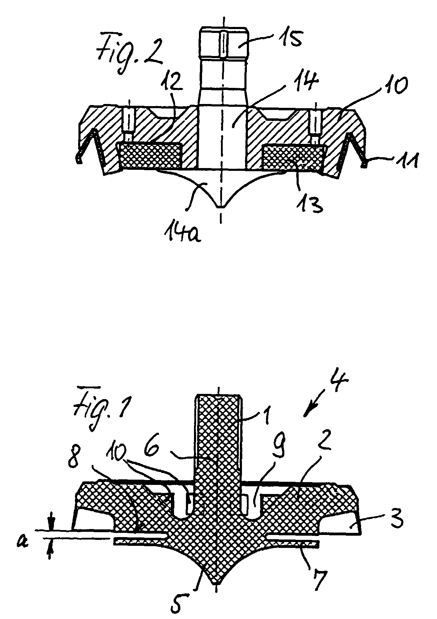

Servoventile mit Kolben dieser Art sind bekannt (Servoventile Bauart 240 der Concordia Fluidtechnik GmbH, Stuttgart), ein Kolben dieser Bauart ist in Fig. 2 der Zeichnung dargestellt. Diese bekannten Kolben bestehen aus einem Ventilteller 10 aus Metall, z.B. aus Messing, einer Manschette 11, die z.B. aus PTFE (Polytetrafluorethylen) besteht, die den Kolben in dem nicht dargestellten Zylinder, in dem der Kolben bewegt wird, abdichtet, sowie aus einer in eine Eindrehung 12 des Ventiltellers eingesetzten Formdichtung 13, die im geschlossenen Zustand auf dem nicht dargestellten Ventilsitz abdichtet. Diese Dichtung kann ebenso wie die Manschette aus unterschiedlichen Werkstoffen, vorzugsweise Elastomeren, bestehen. Gehalten wird diese Dichtung 13 durch einen Bolzen 13, der mit einem Kopf 14a versehen ist, und mit diesem zumindest teilweise über die Dichtung 13 greift. Der Bolzen 14 weist außerdem an seinem von dem Kopf 14a abgewandten Ende einen zylindrischen Bereich 15 auf, der dazu dient, eine Führung gegen ein Abkippen zu bewirken.

Kolben dieser Art bestehen daher aus vier Teilen, die zu dem Kolben zusammengesetzt werden müssen. Dieser Zusammenbauvorgang ist aufwendig, was auch für die Herstellung der Einzelteile gilt.

Der vorliegenden Erfindung liegt die Aufgabe zugrunde, einen Kolben dieser Art so auszugestalten, daß eine einfachere Herstellung möglich ist.

Der erfindungsgemäße Kolben ist zur Lösung dieser Aufgabe dadurch gekennzeichnet, daß Ventilteller, Befestigungszapfen, Manschette und Dichtung einstückig aus Kunststoff hergestellt und insbesondere als Kunststoffspritzteil ausgebildet sind. Diese Ausgestaltung macht eine nachträgliche Montage mehrerer Einzelteile überflüssig. Auch eine eventuelle Nachbearbeitung des so hergestellten Kunststoffteiles wird nicht erforderlich.

In Weiterbildung der Erfindung wird als Kunststoffmaterial Polyoximethylen (POM) verwendet, ein thermoplastisches Material, das sich insbesondere gut für den Einsatz in Vergaserkraftstoffen eignet. Dieses Material bringt den Vorteil mit sich, das es im Gegensatz zu elastomeren Dichtstoffen, wie sie üblicherweise eingesetzt werden, keine Empfindlichkeit gegen sogenannte Treibstoffadditive aufweist. Der neue Kolben besitzt im übrigen nur einen Bruchteil des Gewichtes der ursprünglichen Metallausführung. Dadurch wird es möglich, bei der im Betrieb üblichen waagerechten Einbaulage den Verschleiß am Zylinder entscheidend zu verringern. Durch den neuen Kolben wird daher auch eine erhöhte Lebensdauer des Servoventiles erreicht.

In Weiterbildung der Erfindung wird die Dichtung, die zur Zusammenwirkung mit dem Ventilsitz vorgesehen ist, als eine dünne, radial von der Kolbenachse abstehende Scheibe ausgebildet, die im Abstand zu der Stirnfläche des Ventiltellers umlaufend angeordnet ist.

Diese Ausgestaltung führt dazu, daß diese als Dichtung dienende, dünne umlaufende Scheibe, obwohl sie aus POM besteht, aufgrund ihrer geringen Steifigkeit in der Lage ist, sich beim Schließen des Ventils elastisch dem Ventilsitz anzupassen.

In weiterer Ausbildung der Erfindung kann schließlich die Manschette als eine angespritzte Lippe ausgebildet sein, so daß durch diese Ausgestaltung alle für die Funktion des Kolbens wichtigen Teile als ein Kunststoffspritzteil ausgebildet sein können.

Die Erfindung ist anhand eines Ausführungsbeispieles in der Zeichnung gezeigt und wird im folgenden beschrieben.

Die Fig. 1 zeigt dabei ein einstückiges Kunststoffspritzteil aus Polyoximethylen (POM), das einen zentralen Befestigungzapfen 1 mit einem einstückig daran angeordneten Ventilteller 2 aufweist. Der Ventilteller 2 ist an seinem Umfang mit einer umlaufenden, angespritzten Lippe 3 versehen, die eine Dichtmanschette bildet, die sich an der Wandung des nicht gezeigten Zylinders, in dem sich der erfindungsgemäße Kolben 4 bewegt, dicht anlegt. Der Ventilteller 2 geht auf der von dem Zapfen 1 abgewandten Seite in eine Art Spitze 5 über, an der eine von der Achse 6 des Kolbens 4 radial abstehende dünne Scheibe 7 vorgesehen ist, die im Abstand a von der Stirnfläche 8 angeordnet ist, die auf der von den Befestigungzapfen 1 abgewandten Seite des Ventiltellers 2 liegt. Zwischen dem den Ventilteller 2 bildenden Teil des Kolbens 4 und dem Befestigungszapfen 1 befindet sich eine umlaufende Ausnehmung 9, in die gleichmäßig am Umfang verteilte Vorsprünge 10 von außen nach innen hereinragen, die der kunststoffgerechten Ausgestaltung dienen und eine Materialanhäufung an dieser Stelle vermeiden.

Der Kolben 4 wird als einstückiges Teil im Kunststoffspritzverfahren hergestellt. Jede Art von Nachbearbeitung kann entfallen. Der Kolben weist gegenüber bekannten Kolben ein wesentlich geringeres Gewicht auf. Durch die Verwendung eines geeigneten Kunststoffmateriales ist er auch unempfindlich gegen sogenannte Treibstoffadditive und läßt sich daher besonders gut für ein Servoventil für den Einsatz für Vergaserkraftstoffe verwenden.

## Patentansprüche

1. Kolben für ein Servoventil, der mit einem Ventilteller mit einem zentral angeordneten Befestigungzapfen, einer im Bereich des Umfanges des Ventiltellers umlaufenden Manschette zur Abdichtung im zugeordneten Zylinder sowie mit einer der von dem Zapfen abgewandten Stirnfläche des Ventiltellers zugeordneten Dichtung zur Zusammenwirkung mit einem Ventilsitz versehen ist, dadurch gekennzeichnet, daß Ventilteller (2), Befestigungszapfen (1), Manschette (3) und Dichtung (7) einstückig aus Kunststoff hergestellt, insbesondere als Kunststoffspritzteil ausgebildet sind.

2. Kolben nach Anspruch 1, dadurch gekennzeichnet, daß als Kunststoffmaterial Polyoximethylen (POM) verwendet ist.

3. Kolben nach Anspruch 1, dadurch gekennzeichnet, daß die Dichtung als eine dünne, radial von der Kolbenachse (6) abstehende Scheibe (7) ausgebildet ist, die im Abstand (a) zu der Stirnfläche (8) des Ventiltellers (2) umlaufend angeordnet ist.

4. Kolben nach Anspruch 1, dadurch gekennzeichnet, daß die Manschette (3) als eine angespritzte Lippe ausgebildet ist.
